Europäisches Patentamt

European Patent Office

Office européen des brevets

(11) Publication number: **0 163 360**
**A2**

(12) **EUROPEAN PATENT APPLICATION**

(21) Application number: **85300699.7**

(22) Date of filing: **01.02.85**

(51) Int. Cl.⁴: **F 16 B 5/06**

(30) Priority: **03.02.84 DK 489/84**

(43) Date of publication of application:
**04.12.85 Bulletin 85/49**

(84) Designated Contracting States:
**AT BE CH DE FR GB IT LI LU NL SE**

(71) Applicant: **THERMOFORM a/s**
**Elektronvej 10**
**DK-2670 Greve Strand(DK)**

(72) Inventor: **Hansen, Helge**
**Storeholm 7**
**DK-2760 Greve Strand(DK)**

(74) Representative: **Hartley, David et al,**
**c/o Withers & Rogers 4 Dyer's Buildings Holborn**
**London, EC1N 2JT(GB)**

(54) **Two-part connector.**

㊿ A two part connector for fastening an article to a body, for example a blind or a visor to a window of a motor car, comprising two parts (1, 2) one for mounting on the article, and the other on the body, and one part of which comprises a substantially cylindrical stud (7) with an undercut, annular collar, and the other part comprises a bushing with internal projections (6, 14) being adapted to pass the collar under resilient deformation of one of the two parts during the mounting. In order to enable disassembly of the two parts of the mounting means, a tubular key (12) is insertable between the parts, the outer diameter of which key corresponds to the inner diameter of the bushing or the inner diameter of which corresponds to the outer diameter of the cylindrical stud, and the wall thickness of which is just greater than the size of the resilient deformation of the parts during the mounting.

EP 0 163 360 A2

Croydon Printing Company Ltd

## TWO-PART CONNECTOR

The present invention relates to a two-part connector
and more particularly, though not exclusively, a connector
for mounting an article on a body, for example a blind or
visor on a window.

Known connectors for such purposes comprise a stud part
for insertion in a bushing part to engage projections on
one part behind abutments on the other part.

In certain connectors of this type, the connector can
be released by giving one of the parts a sharp pull greater
than the normal holding force, for which the connector is
designed.

Blinds for windows are  normally mounted by means of
a bayonet connector which for locking and unlocking requires
rotation of one of the parts through 90 degrees.  For this
purpose a tool is required but this may, however, be as simple
as  a coin.

We now propose a two-part connector enabling a connection
to be made simply by pressing the parts together, but which
can be released only by using a key, which key is preferably
simple in design and to manufacture.  However, the key must
not be replaceable with objects normally found in people's
pockets, such as coins or door keys.

In accordance with the invention a two-part connector
comprises a bushing part and a stud part for insertion in
the bushing part to engage one or more projections on one
part behind one or more abutments on the other, by resilient deformation of at least one of the parts, the parts being resiliently deformable to disengage the projections and/or abutments enabling separation of the two parts, by inserting a tubular key into an annular opening defining between the two parts.

The tubular key preferably has a predetermined internal and external diameter. To separate the parts of the connector is a simple operation requiring only insertion of the key, by which at least one of the parts, more particularly, the or each projection is deformed or displaced so as to disengage the interlocking projection(s) and abutment(s). This allows one of the parts to be readily removed from the other. The tubular key is simple and rugged, but cannot be replaced by any other objects with a differing shape or diameter. Correspondingly, the key is unlike objects normally found in people's pockets such as coins, door keys and the like. The connector is thereby to a certain degree protected against unauthorised unlocking.

Other features of the present invention are set forth in the appendent claims.

Embodiments of the invention will now be described by way of example with reference to the accompanying drawings, in which:

Figure 1 is a vertical section through a first embodiment of the two-part connector; and

Figure 2 is a vertical section through a second embodiment of the two-part connector.

0163360

-3-

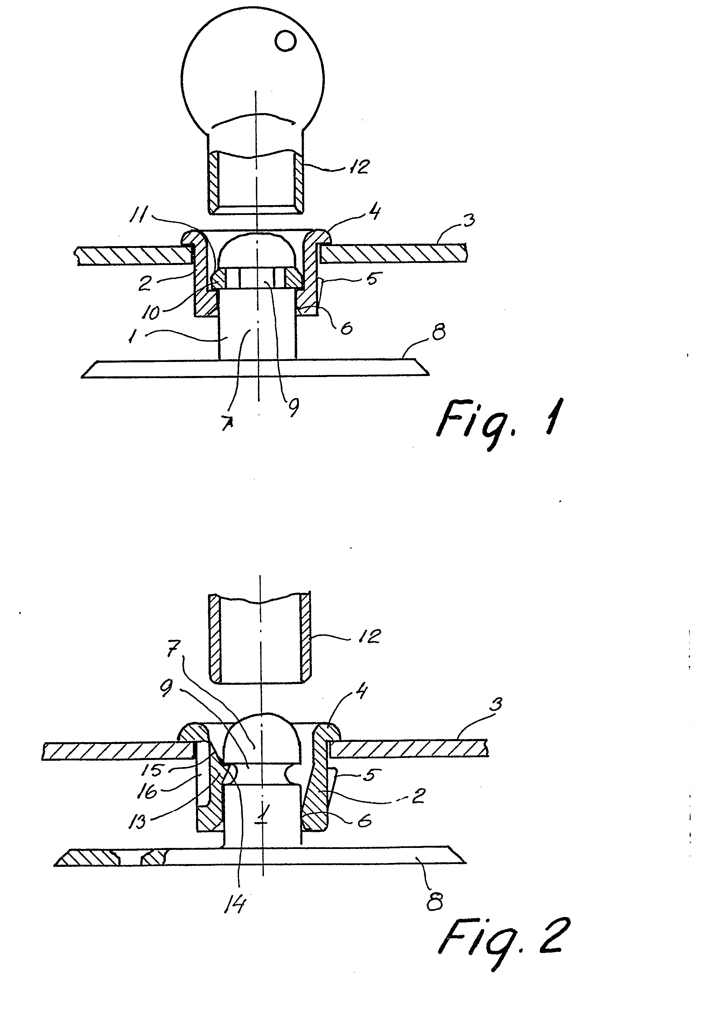

The mounting connector shown in Figure 1 comprises two
parts 1, 2 each of which is adapted to be fastened to one
of the  two bodies that are to be held together.  The connector
is especially suited for securing a blind or an auto visor
(usually manufactured from a plastic sheet by vacuum forming)
to the rear window of a motor car. The part 1 in the form
of a stud 7 is mounted on the window by gluing or alternatively
to the bodywork of the car by means of selftapping screws.
The other part 2, in the form of a bushing is inserted through
an opening in the plastic sheet 3, and has a collar adapted
to engage the edge of the opening.  Inside in the part 1
an annular projection 6 is provided which is able to slide
onto part 1.  The stud part 1 has an integral base plate
8, by means of which the part 1 is fastened to the body.
The free end of the stud is rounded in order to facilitate
insertion of the stud 7 in the part 2.  In an annular groove
9 around the stud 7 is inserted a slotted ring 10 forming
an undercut collar on the stud.  The outer diameter of the
slotted ring 10 is larger than that of the stud 7, but its
internal diameter is smaller than the diameter of the stud.

The ring 10 is resilient and has a chamfer on the top of
its outer edge, so that when the part 2 is placed onto the
stud 7, the ring 10 is pressed into the groove 9  which is
sufficiently deep to receive the entire ring 10, allowing
the projection 6 to pass the ring.  Thereafter, the ring
9 snaps back and locks the part 2.   If it is desired to
disassemble the two parts 1 and 2, a tube shaped key 12, the inner diameter of which corresponds to the outer diameter of the stud 7 and the outer diameter of which corresponds to the inner diameter of the tubular portion of the part 2, is inserted into the annular gap between the two parts. The key 12 will then press the ring 10 into the groove 9, allowing the part 2 to be lifted off.

In the embodiment of Figure 2 parts corresponding to similar parts in Figure 1 bear the same reference numerals, and the description also covers these parts. In the embodiment of Figure 2 no ring is inserted into the groove 9 the upper portion of the stud 7 in connection with the groove forming a undercut collar. On the part 2 on the other hand a number of tongues 13 are arranged, which tongues have inwardly directed projections 14 and a chamfered upper end 15. When the part 2 is mounted on the stud 7, the tongues 13 will bend outwards resiliently until the projections snap into the groove 9, locking together the two parts. If the part 2 is to be removed from the part 1, a tubular key 12 is inserted between the two parts, the key pressing the tongues outwards owing to the chamfered upper portion 15 of the tongues 13 into a recess 16 arranged behind the tongues. The key 12 and the part 2 may then be removed from the stud 7.

## CLAIMS:

1.  A two part connector comprising a bushing part and a stud part for insertion in the bushing part to engage one or more projections on one part behind one or more abutments on the other by resilient deformation of at least one the parts, the parts being resiliently deformable to disengage the projections and/or abutments 'enabling separation of the two parts, by inserting a tubular key into an annular opening defined between the two parts.

2.  A two part connector according to claim 1 in combination with a tubular key for enabling separation of the parts.

3.  A connector according to claim 1 or claim 2 wherein the stud part is substantially cylindrical having an undercut annular collar and the bushing part has internal projections which are resiliently deformable to admit the stud and engage behind the collar.

4.  A connector according to claim 1 in which the outer collar on the cylindrical stud is a slotted ring, the edge of the tubular key having an internal chamfer for cooperation with a corresponding chamfer on the slotted ring.

5.  A connector according to any one of claims 1 to 3, in which the bushing has resilient tongues, carrying the projections and the tongues have a bevelled edge of the same width as the projections, the projection being arranged as an end stop for the inserted key.

6.    A connector according to claim 5, wherein the tongues are fastened to an annular portion of the bushing, into which the stud is inserted, and which tongues are delimited by means of U-shaped cuttings in the side walls of the bushing.

7.    A connector according to any one of claims 1 to 6 wherein the outer diameter of the key corresponds to the internal diameter of the bushing or the inner diameter of which corresponds to the outer diameter of the stud, and wherein the wall thickness of the tubular key is just greater than the relative resilient deformation effected during insertion of the stud part to engage the two parts.

*Fig. 1*

*Fig. 2*